# EUROPÄISCHE PATENTSCHRIFT

(11) **EP 2 518 814 B1**
(45) Veröffentlichungstag und Bekanntmachung des Hinweises auf die Patenterteilung: **25.11.2015**
(21) Anmeldenummer: 12002921.0
(22) Anmeldetag: 25.04.2012
(51) Int. Cl.: H01M 10/48, H01M 10/42, H01M 2/10, H01M 10/0525

(54) **Lithium-Ionen-Batterie für ein Flurförderzeug**
Lithium-ion battery for an industrial truck
Batterie ion-lithium pour un chariot de manutention

(30) Priorität: 29.04.2011 DE 102011100928
(43) Veröffentlichungstag der Anmeldung: 31.10.2012
(73) Patentinhaber: Jungheinrich Aktiengesellschaft, 22047 Hamburg (DE)
(72) Erfinder: Opitz, Michael, 23866 Nahe (DE); Taube, Stephan, 22846 Norderstedt (DE); Vahldiek, Dietrich, 24558 Henstedt-Ulzburg (DE)
(74) Vertreter: Hauck Patentanwaltspartnerschaft mbB

(56) Entgegenhaltungen:
- DE-A1- 19 810 746
- DE-U1-202009 015 040
- US-A1- 2010 062 329
- US-A1- 2010 136 392

## Beschreibung

Die vorliegende Erfindung betrifft eine Lithium-Ionen-Batterie für ein Flurförderzeug.

Lithium-Ionen-Batterien, die auch als Lithium-Ionen-Akkumulatoren bezeichnet werden, sind Akkumulatoren, die auf der Basis von Lithium arbeiten. Lithium-Ionen-Batterien sind aufgrund ihrer großen Energiedichte besonders für den Einsatz in Flurförderzeugen geeignet. Für den Einsatz von Lithium-Ionen-Batterien in Flurförderzeugen, insbesondere bei Flurförderzeugen ohne Federung, werden besondere Anforderungen an die mechanische Stabilität einer Lithium-Ionen-Batterie gestellt. Hinzu kommt, dass Lithium-Ionen-Batterien sich in ihrem Ladezustand ausdehnen, wodurch es zu einem Spiel gegenüber dem normalen Fahrbetrieb kommt. Erschütterungen können somit zu Schwingungen führen, die möglicherweise zum Abreißen von elektrischen Kontakten innerhalb der Batterie führen. Die Lithium-Ionen-Batterie besteht aus mehreren Batteriezellen, die zu einem oder mehreren Stacks zusammengefasst sind. Ferner ist bekannt, in einer Lithium-Ionen-Batterie ein Batteriemanagementsystem vorzusehen, das elektrisch leitend mit den Batteriezellen verbunden ist.

Aus DE 198 10 746 A1 ist eine Platine mit einer Schaltung zur Überwachung einer mehrzelligen Akkumulatorbatterie bekannt geworden. Die einzelnen Zellen sind in Serie verschaltet und werden einzeln elektronisch überwacht, indem jeweils die Zellspannung und die Polanschlusstemperatur gemessen werden. Dabei ist die Elektronik zur Spannungs- und Temperaturmessung sowie zuschaltbare parallele Widerstände zur Durchführung eines Ladungsausgleichs auf zwei Platinen untergebracht. Für die Temperaturmessung gehen von den Polanschlusskontakten der Platine Wärmeleitstrecken ab, die mit einem in die Schaltung integrierten Temperatursensor verbunden sind.

Aus DE 20 2009 015 040 U1 ist ein Modul zur Abdeckung einer elektrochemischen Batteriezelle bekannt geworden, bei dem eine erste Platte und eine zweite Platte vorgesehen sind, wobei ein Abgriff der Batteriezellenspannung und der Temperatur auf der zweiten Platte erfolgt und über Steckkontakte zu der anderen Platte geleitet wird.

Aus DE 10 2009 036 086 A1 ist eine Überwachungselektronik für Batterien bekannt geworden, bei der die Zellüberwachungsschaltkreise auf einer flexiblen Platine angeordnet sind.

Aus US 2010/0062329 A1 ist eine Verbindungsunterlegscheibe für eine Batterieeinheit bekannt, die eine Temperaturüberwachung auf der Leiterkarte ermöglicht. Hierzu werden Temperatursensoren auf der Leiterkarte und die Verbindungsunterlegscheibe über Kupferkontakte kontaktiert.

Der Erfindung liegt die Aufgabe zugrunde, eine Lithium-Ionen-Batterie zu schaffen, die für den Einsatz in einem Flurförderzeug geeignet ist.

Erfindungsgemäß wird die Aufgabe durch eine Lithium-Ionen-Batterie mit den Merkmalen aus Anspruch 1 gelöst. Vorteilhafte Ausgestaltungen bilden den Gegenstand der Unteransprüche.

Die erfindungsgemäße Lithium-Ionen-Batterie für ein Flurförderzeug weist mehrere Batteriezellen auf, die zu einem oder mehreren Stacks zusammengefasst sind. Je nach verwendeter Spannung für die Lithium-Ionen-Batterie sind die Batteriezellen mit ihrer definierten Ausgangsspannung in Reihe oder parallel geschaltet. Ferner besitzt die Lithium-Ionen-Batterie für das Flurförderzeug ein Batteriemanagementsystem, das leitend mit den Batteriezellen verbunden ist. Erfindungsgemäß ist das Batteriemanagementsystem auf einer Leiterkarte angeordnet, die einen Temperatursensor aufweist, der die Temperatur der Batteriezellen erfasst. Die Temperaturmessung kann für jede Zellen einzeln oder für sämtliche Zellen in einem Stack der Batteriezellen erfolgen. Dem erfindungsgemäße Aufbau der Lithium-Ionen-Batterie liegt die Erkenntnis zugrunde, dass eine Temperaturmessung auf der Leiterkarte für das Batteriemanagementsystem die Möglichkeit schafft, die Temperatur im Bereich der elektrischen Anschlüsse der Batteriezellen zu messen. Die so gemessene Temperatur kann zwar von den Temperaturen im Zentrum der Batteriezellen oder in entfernt liegenden Randbereichen abweichen, für die Überwachung des Lade- oder Entladevorganges der Batteriezellen ist es aber ausreichend, den Temperatursensor auf der Leiterkarte anzuordnen und so die Temperatur einer oder mehrerer Batteriezellen im Bereich der elektrischen Anschlüsse zu messen.

Erfindungsgemäß weist die Leiterkarte Einpresshülsen auf, über die die Leiterkarte mechanisch mit einem die Batteriezellen tragenden Rahmen verbunden ist. Je nach Aufbau der Batteriezellen können diese über die Einpresshülsen direkt mit der Leiterkarte verbunden werden. Häufig werden für die Batteriezellen beutelförmige Behälter gewählt, so dass diese in einem Rahmen gehalten werden, der über die Einpresshülsen mit der Leiterkarte des Batteriemanagementsystems verbunden ist.

Erfindungsgemäß ist jede Einpresshülse in thermischem Kontakt mit einer oder mehreren Batteriezellen, um durch einen auf der Leiterkarte angeordneten Temperatursensor die Temperatur der Batteriezelle zu erfassen. Die Einpresshülse dient damit als thermische Brücke zwischen der Batteriezelle und dem auf der Leiterkarte angeordneten Temperatursensor. Die Anordnung des Temperatursensors auf der Leiterkarte vereinfacht den Aufbau der Lithium-Ionen-Batterie und verhindert, dass die Batteriezellen direkt in Kontakt mit dem Temperatursensor gelangen. Zudem liegt der Anordnung der Einpresshülse die Erkenntnis zugrunde, dass eine erfasste Temperatur der Batteriezellen nahe den elektrischen Anschlüssen und somit nahe der Leiterkarte ausreichend ist, um die Temperatur der Lithium-Ionen-Batterie zu überwachen.

Erfindungsgemäß weist jede der Einpresshülsen einen tonnenförmigen Körper auf, der mit einem Vorsprung in einer Bohrung in der Leiterkarte angeordnet ist. Durch die Anordnung der Einpresshülsen an der Leiterkarte und insbesondere durch das Hineinragen eines Vorsprungs der Einpresshülse in die entsprechende Bohrung in der Leiterkarte wird eine stabile Verbindung zwischen Einpresshülse und Leiterkarte hergestellt.

In einer bevorzugten Weiterbildung wird die Einpresshülse über ein Befestigungsmittel mit der Leiterkarte verbunden. Das Befestigungsmittel kann beispielsweise durch die Bohrung in der Leiterkarte hindurchgeführt sein, um die Einspresshülse an der Leiterkarte zu halten.

In einer bevorzugten Weiterbildung steht die Einpresshülse in elektrischem Kontakt mit einer oder mehreren Batteriezellen, um die Spannung der Batterie bzw. der Batteriezellen zu messen. Neben der Temperaturüberwachung dient die Einpresshülse also auch dazu, die Spannung der Batteriezellen zu überwachen.

Eine bevorzugte Ausgestaltung der erfindungsgemäßen Lithium-Ionen-Batterie wird nachfolgend näher beschrieben.

Es zeigt:
- Fig. 1: die erfindungsgemäße Lithium-Ionen-Batterie für ein Flurförderzeug mit einer abgenommenen Gehäuseschale,
- Fig. 2: eine Ansicht auf eine an einem Rahmen für zwei parallele Stacks angeordnete Leiterkarte,
- Fig. 3: eine Detailansicht der Leiterkarte aus Fig. 2 und
- Fig. 4: eine Schnittansicht der Befestigung der Leiterkarte an einem Rahmen für die Stacks der Batteriezellen.

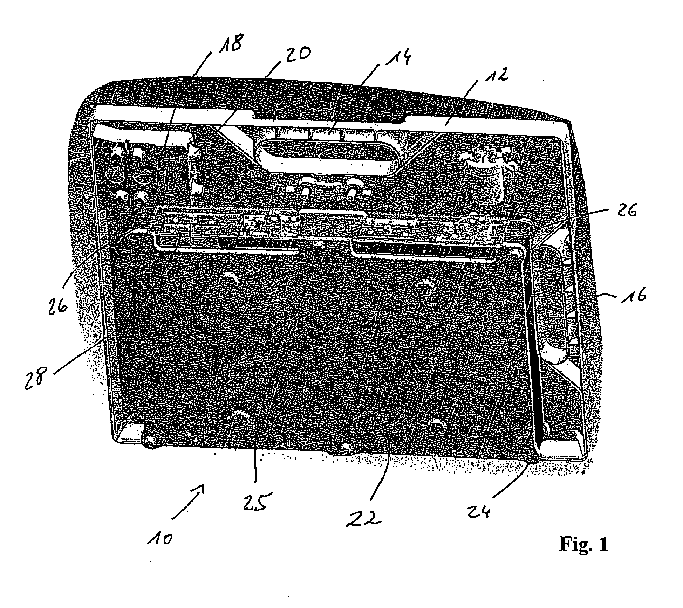

Fig. 1 zeigt eine erfindungsgemäße Lithium-Ionen-Batterie 10 mit einer Gehäusehälfte 12. Die Gehäusehälfte 12 ist einstückig aus einem Kunststoffmaterial hergestellt und besitzt an zwei Seiten Griffe 14 und 16. Ferner ist in der Gehäusehälfte 12 eine Schale 18 vorgesehen, die für eine elektrische Steckverbindung (nicht dargestellt) zum Anschluss der Batterie an das Flurförderzeug oder ein Ladegerät vorgesehen sein kann. Die Schale 18 kann einstückig mit der Gehäusehälfte 12 ausgebildet sein, oder als separates Bauteil in der Gehäusehälfte 12 befestigt sein. Die Schale 18 besitzt Durchgangsöffnungen 20 für Leitungen, bestehend aus Leistungs- und Datenanschluss.

In der Gehäusehälfte 12 ist ein im Wesentlichen rechteckiger Träger 22 angeordnet, der zwei parallel zueinander angeordnete Trägerplatten 23 besitzt, die über Schrauben 24 miteinander verbunden sind. Zwischen den Trägerplatten 23 sind parallel zueinander Rahmen 26 angeordnet, wobei die Schrauben 24 durch die Rahmen 26 in ihren Eckbereichen geführt sind. Die Rahmen 26 halten jeweils die Batteriezellen, die gelegentlich auch als Zellchemie bezeichnet werden. In dem dargestellten Ausführungsbeispiel aus Fig. 1 sind jeweils vier Rahmen 26 flächig übereinander zu einem Stapel angeordnet und zwei dieser Stapel an einer Flachseite nebeneinander angeordnet. In dem Bereich, in dem die nebeneinander angeordneten Rahmen mit den Stapeln zusammenstoßen, sind diese über Schrauben 25 mit der Trägerplatte 23 verbunden. Die Batteriezellen werden in dem Rahmen 26 jeweils so gehalten, dass die Anschlüsse für die Batteriezellen 28 aus dem Rahmen 26 vorstehen. In an sich bekannter Weise bestehen die Batteriezellen aus Beuteln, die entlang ihrem Umfang in dem Rahmen 26 gehalten werden, wobei die elektrischen Anschlüsse 28 zu den Batteriezellen aus dem Rahmen 26 vorstehen und umgeklappt sind.

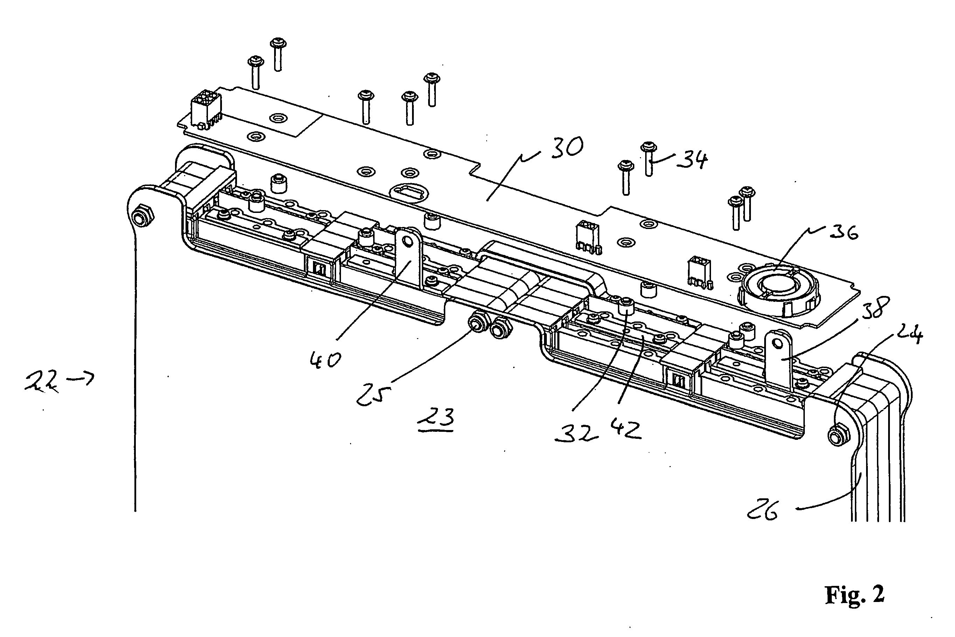

Fig. 2 zeigt den Träger 22 mit der Trägerplatte 23 und die Leiterkarte 30 in einer auseinandergezogenen Darstellung. Die Leiterkarte 30 besitzt eine im Wesentlichen rechteckige Form und kann über Schrauben 34 und Einpresshülsen 32 mit den Rahmen 26 für die Batteriezellen verbunden werden. Auf der Leiterkarte 30 ist das Batteriemanagementsystem für die Batterie angeordnet, wobei zur besseren Übersicht lediglich ein Ferritring 36 dargestellt ist, der über eine Hall-Sensorik den über den Anschluss 38 fließenden Strom misst. Der Anschluss bildet den Plus-Pol der Zellen. Der Strom des zweiten Stapels von Rahmen 26 wird über den Anschluss 40 als Minus-Pol geleitet. Die Verbindung zwischen den einzelnen Stapeln kann durch flexible Gewebeleitungen (nicht dargestellt) oder über einen Verbindungsbügel erfolgen.

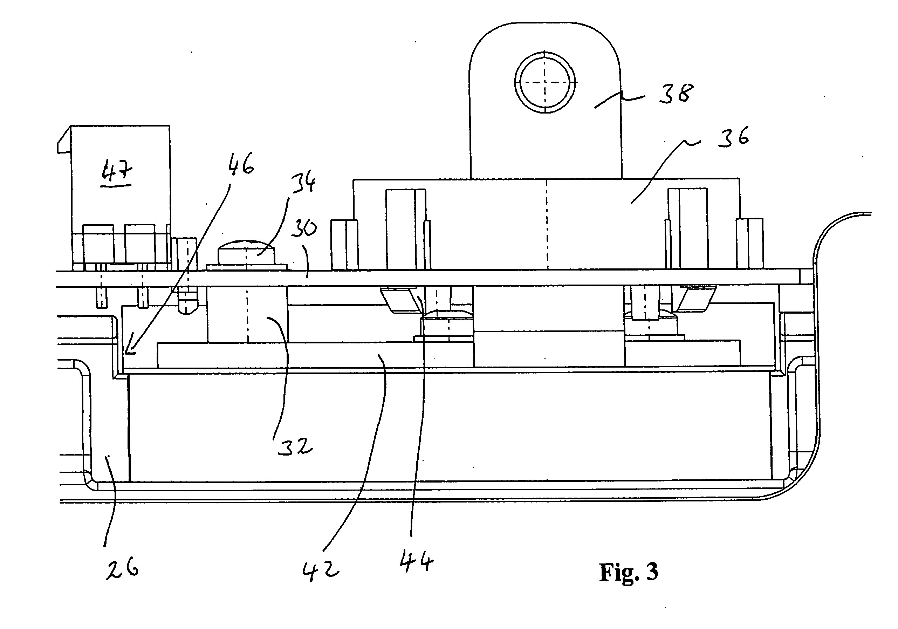

Fig. 3 zeigt eine Detailansicht für den Anschluss 38, der sich durch einen Ferritring 36 hindurcherstreckt. Deutlich zu erkennen ist, dass das Gehäuse des Ferritrings 36 über Rastvorsprünge 44, die die Leiterkarte 30 hintergreifen, an dieser befestigt ist. Ferner ist in der Darstellung aus Fig. 3 zu erkennen, dass der Rahmen 26, in dem die Batteriezellen gehalten sind, eine Vertiefung 46 besitzt, in der der tonnenförmige Körper der Einpresshülse 32 auf einem oberen Anschlussbereich 42 der Batteriezelle aufliegt. Hierdurch wird ein thermischer Kontakt zwischen der Batteriezelle in ihrem oberen Bereich 42 mit der Leiterkarte 30 hergestellt, so dass eine Temperaturüberwachung auf der Leiterkarte 30 erfolgen kann. Ein Temperatursensor, der die von der Einpresshülse 32 aufgenommene Wärmemenge über die Leiterkarte 30 erfasst, ist räumlich nahe zu der Einpresshülse auf der Leiterkarte 30 angeordnet. Ein Stecker 47 für Datenleitungen ist ebenfalls auf der Leiterkarte dargestellt.

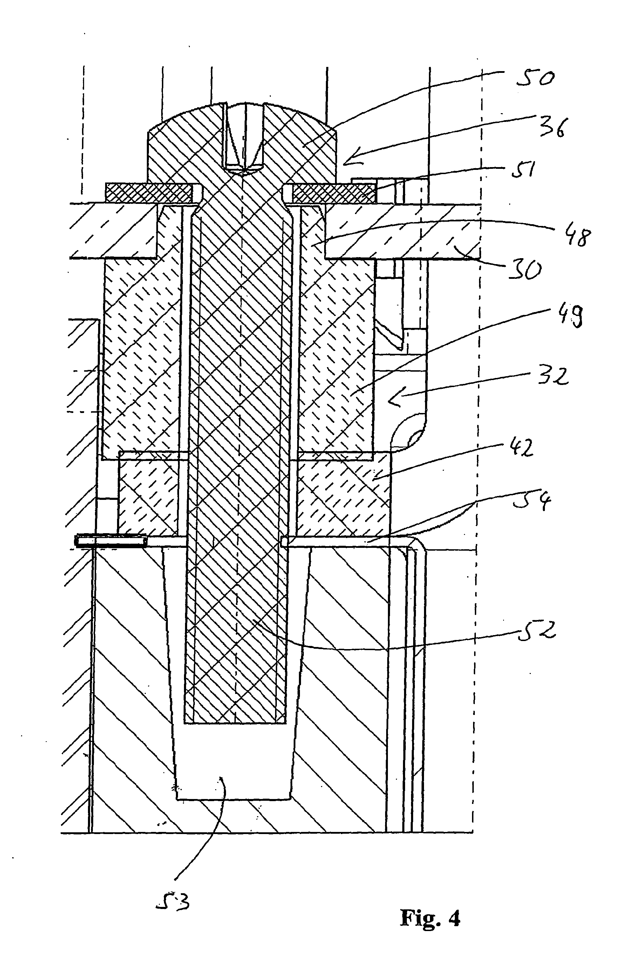

Fig. 4 zeigt die Befestigung der Einpresshülse 32 im Detail. Die Hülse 32 besitzt einen tonnenförmigen Körper 49, an dem sich ein umlaufender Vorsprung 48 anschließt. Der Vorsprung 48 besitzt eine Höhe, die ungefähr der Dicke der Leiterkarte 30 entspricht.

Durch die Einpresshülse 32 ist eine Schraube 36 geführt, die mit ihrem Schraubenkopf 50 über eine Unterlegscheibe 51 auf der Leiterkarte 30 aufliegt. Die Schraube 36 besitzt einen Schraubenschaft 52, der in einer Messinghülse verschraubt ist. Die Messinghülse ist nicht dargestellt und wird in den Fußraum 53 für die Schraube eingesetzt. Die Messinghülse besitzt ein Innengewinde für den Schraubenschaft 52. Der Schraubenschaft 52 erstreckt sich durch eine Andrückleiste 42 für einen abgewinkelten Ableiter 54 der Batteriezelle. Der Ableiter 54 bildet einen Pol der Batteriezelle. Der Ableiter 54 steht in flächigem Kontakt mit der Andrückleiste 42, so dass ein Wärmetransport über die Andrückleiste 42 und den Körper 49 der Einpresshülse zu der Leiterkarte 30 erfolgt. Der Körper 49 der Einpresshülse 32 steht in engem Kontakt mit der Andrückleiste 42 der Batteriezelle. Für eine gute Wärmeleitung sind die Einpresshülse 32 und die Andrückleiste 42 aus Metall hergestellt.

Die Überwachung der Batteriezellen erfolgt durch ein Batteriemanagementsystem. Die Leiterkarte 30 besitzt ungefähr die Maße der Seite des oder der Stacks, an der sich die Anschlussfahnen der Batteriezellen befinden. Die Leiterkarte ist mit Einpresshülsen 32 versehen. Diese dienen zur mechanischen Befestigung der Leiterkarte und zur Herstellung des elektrischen und thermischen Kontakts zwischen Batteriezellen und Elektronik. Hierüber werden die Spannungen gemessen, es findet der Ladungsausgleich statt und die Temperaturen der Batteriezellen werden an den Einpresshülsen gemessen. Auf der Leiterkarte sind in der Nähe der Einpresshülsen Temperatursensoren angeordnet. Die Temperatursensoren messen die Temperatur der einzelnen Zellen, wobei es auch möglich ist, die Temperatur eines Stacks oder der gesamten Batterie zu erfassen. Die Strommessung erfolgt mittels Shunt oder, wie in dem Ausführungsbeispiel dargestellt, durch eine Hall-Sensorik mit einem Magnetring.

Die elektromechanischen Komponenten, wie beispielsweise der Träger 22, sind in den Gehäuseschalen 12 befestigt. Die beiden Gehäusehälften werden aufeinander gesteckt und können verklebt oder vibrationsverschweißt werden. Eine mechanische Verbindung zwischen den Gehäusehälften, beispielsweise durch Verklippsen, ist ebenfalls möglich.

## Patentansprüche

1. Lithium-Ionen-Batterie für ein Flurförderzeug, mit
- mehreren Batteriezellen, die zu einem oder mehreren Stacks zusammengefasst sind, und
- einem Batteriemanagementsystem, das elektrisch leitend mit den Batteriezellen verbunden ist,
**dadurch gekennzeichnet, dass**
das Batteriemanagementsystem auf einer Leiterkarte (30) angeordnet ist, die mit den Anschlüssen der Batteriezellen verbunden ist und einen Temperatursensor (47) aufweist, der die Temperatur von den Batteriezellen erfasst, wobei die Leiterkarte (30) Einpresshülsen (32) aufweist, über die die Leiterkarte mechanisch mit einem die Batteriezellen tragenden Rahmen (26) verbunden ist und von denen jede in thermischem Kontakt mit einer oder mehreren Batteriezellen steht, um durch den auf der Leiterkarte (30) angeordneten Temperatursensor (47) die Temperatur der Batteriezelle zu erfassen, wobei jede Einpresshülse (32) einen tonnenförmigen Körper (49) aufweist, der mit einem Vorsprung (48) in einer Bohrung in der Leiterkarte (30) angeordnet ist und der Rahmen (26), in dem die Batteriezellen gehalten sind, eine Vertiefung (46) besitzt, in der der tonnenförmige Körper der Einpresshülse (32) auf einem oberen Anschlussbereich (42) der Batteriezelle aufliegt.

2. Lithium-Ionen-Batterie nach Anspruch 1, **dadurch gekennzeichnet, dass** die Einpresshülse (32) über ein Befestigungsmittel mit der Leiterkarte verbunden ist.

3. Lithium-Ionen-Batterie nach einem der Ansprüche 1 oder 2, **dadurch gekennzeichnet, dass** jede Einpresshülse in elektrischem Kontakt mit einer oder mehreren Batteriezellen steht, um die Spannung der Batteriezelle bzw. der Batteriezellen zu messen.

## Claims

1. A lithium ion battery for an industrial truck, with
• several battery cells which are combined into one or several stacks, and
• a battery management system, which is electrically conductive connected to the battery cells,
**characterised in that**
the battery management system is arranged on a printed circuit board (30) that is connected to the terminals of the battery cells and comprises a temperature sensor (47), which detects the temperature of the battery cells, the printed circuit board (30) comprising press-fit sleeves (32) via which the printed circuit board is mechanically connected to a frame (26) that bears the battery cells, and from which each one is in thermal contact with one or several battery cells in order to detect the temperature of the battery cell via the temperature sensor (47) arranged on the printed circuit board (30), each press-fit sleeve (32) having a barrel-shaped body (49) that is arranged in a bore in the printed circuit board (30) with a projection (48), and the frame (26) wherein the battery cells are retained has a deepening (46) in which the barrel-shaped body of the press-fit sleeve (32) is supported on an upper terminal zone (42) of the battery cell.

2. A lithium ion battery according to claim 1, **characterised in that** the press-fit sleeve (32) is connected to the printed circuit board by a fastening means.

3. A lithium ion battery according to one of claims 1 or 2, **characterised in that** each press-fit sleeve is in electrical contact with one or several battery cells in order to measure the voltage of the battery cell or the battery cells, respectively.

## Revendications

1. Batterie lithium-ion pour un chariot de manutention, avec
• plusieurs éléments de batterie qui sont combinés en une ou plusieurs piles, et
• un système de gestion de la batterie, qui est relié de manière électriquement conductible aux éléments de batterie,
**caractérisée en ce que**
le système de gestion de la batterie est arrangé sur une plaquette à circuits imprimés (30) qui est reliée aux bornes électriques des éléments de batterie et comporte un capteur de température (47), qui détecte la température des éléments de batterie, la plaquette à circuits imprimés (30) comportant des douilles à sertir (32) par lesquelles la plaquette à circuits imprimés est reliée de manière mécanique à un cadre (26) qui porte les éléments de batterie, et dont chacune est en contact thermique avec un ou plusieurs éléments de batterie pour détecter la température de l'élément de batterie par le capteur de température (47) disposé sur la plaquette à circuits imprimés (30), chaque douille à sertir (32) ayant un corps en forme de tonneau (49) qui est arrangé avec une saillie (48) dans un perçage dans la plaquette à circuits imprimés (30), et le cadre (26) dans lequel les éléments de batterie sont tenues comporte une cavité (46) dans laquelle le corps en forme de tonneau de la douille à sertir (32) repose sur une zone supérieure des bornes électriques (42) de l'élément de batterie.

2. Batterie lithium-ion selon la revendication 1, **caractérisée en ce que** la douille à sertir (32) est reliée à la plaquette à circuits imprimés via un moyen de fixation.

3. Batterie lithium-ion selon une des revendications 1 ou 2, **caractérisée en ce que** chaque douille à sertir est en contact électrique avec un ou plusieurs éléments de batterie pour mesurer la tension électrique de l'élément de batterie ou respectivement des éléments de batterie.
